# EUROPÄISCHE PATENTSCHRIFT

(11) **EP 2 595 853 B1**
(45) Veröffentlichungstag und Bekanntmachung des Hinweises auf die Patenterteilung: **14.05.2014**
(21) Anmeldenummer: 11736004.0
(22) Anmeldetag: 21.07.2011
(51) Int. Cl.: B61L 17/02, G01S 13/88, G01F 23/288, G01S 13/87, G01F 23/284

(54) **VERFAHREN ZUR FÜLLSTANDBESTIMMUNG EINER SCHIENEN- ODER FAHRWEGGEBUNDENEN LOGISTIKANLAGE**
METHOD FOR DETERMINING THE FILL LEVEL OF A RAIL- OR TRACK-BOUND LOGISTICS INSTALLATION
PROCÉDÉ DE DÉTERMINATION DU NIVEAU DE REMPLISSAGE D'UNE INSTALLATION LOGISTIQUE SUR RAILS

(30) Priorität: 22.07.2010 DE 102010031910
(43) Veröffentlichungstag der Anmeldung: 29.05.2013
(73) Patentinhaber: FRAUNHOFER-GESELLSCHAFT zur Förderung der angewandten Forschung e.V., 80636 Munich (DE); Patentverwertung Werner Haag, 27711 Osterholz-Scharmbeck (DE)
(72) Erfinder: ESSEN, Helmut, 53343 Wachtberg (DE); BREHM, Thorsten, 53340 Meckenheim (DE); BRENNER, Andreas, 53343 Wachtberg (DE); KLARE, Jens, 53343 Wachtberg (DE); THÖNNESSEN, Ulrich, 76228 Karlsruhe (DE); SCHULZ, Karsten, 76137 Karlsruhe (DE); HAAG, Werner, 27711 Osterholz (DE); WÜST, Martin, 07613 Heideland (DE)
(74) Vertreter: Rösler, Uwe
(86) Internationale Anmeldenummer: PCT/EP2011/003665
(87) Internationale Veröffentlichungsnummer: WO 2012/010313

(56) Entgegenhaltungen:
- WO-A2-2009/154787
- DE-A1- 4 302 426
- DE-A1- 19 600 187
- DE-A1-102004 032 346
- DE-B- 1 144 953
- FR-A1- 2 922 029

## Beschreibung

### Technisches Gebiet

Die Erfindung bezieht sich auf ein Verfahren zur Füllstandsbestimmung einer fahrweggebundene, eigen oder fremd angetriebene Fahrzeuge zwischenspeichemden Logistikanlage, insbesondere in Form eines Verschiebe- oder Rangierbahnhofes mit längs einer Gleisanlage anordenbaren Waggons, bei dem mittels Radartechnik die Fahrzeuge längs wenigstens eines zu überwachenden Fahrweges der Logistikanlage erfasst werden und der Füllstand, d.h. wenigstens eine Anzahl von Fahrzeugen längs des wenigstens einen zu überwachenden Fahrweges, ermittelt und zur Darstellung gebracht wird.

### Stand der Technik

Aus der DE 1 144 953 ist ein gattungsgemäßes Verfahren zur Bestimmung und Auswertung des Füllstandes von Verkehrswegen zu entnehmen, bei dem längs einzelner Fahrwege sich bewegende Fahrzeuge mittels einer auf dem Dopplerprinzip arbeitenden Rückstrahlmesseinrichtung erfasst werden. Die zur Realisierung des Verfahrens erforderliche, bekannte Anordnung verfügt über wenigstens eine Richtstrahlantenne, die jeweils neben oder etwas oberhalb eines Fahrweges angeordnet ist und eine in Richtung des jeweiligen Fahrwegverlaufes orientierte räumliche Sende- und Empfangscharakteristik verfügt. Die Erfassung längs des Fahrweges sich bewegender Fahrzeuge erfolgt durch Zählung von Nulldurchgängen in der Dopplerfrequenz, wobei ein am Fahrweg vorgesehenes Auslöserelais vorgesehen ist, das die Zählvorrichtung aktiviert. Im Falle der Füllstandsbestimmung einer Gleisanlage wird die Zählung jedes einzelnen Waggons, der über das schienenseitig vorgesehene Auslöserelais rollt, ausgelöst, wobei die radarüberwachte Zählung endet, sobald der jeweilige Waggon durch Aufprall auf einen anderen Wagen zum Stehen kommt, da ein stehender Waggon keine Dopplersignale im Rückstreuradarsignal erzeugt. Das bekannte Verfahren erfasst somit den jeweils zurückgelegten Weg des letzten Wagens, der sich längs des überwachten Gleises fortbewegt hat und gibt auf diese Weise den Füllstand des Gleises an.

### Darstellung der Erfindung

Der Erfindung liegt die Aufgabe zugrunde ein Verfahren zur Füllstandsbestimmung einer Fahrweg gebundenen, eigen oder fremd angetriebene Fahrzeuge zwischenspeichemden Logistikanlage, insbesondere in Form eines Verschiebe- oder Rangierbahnhofes mit längs einer Gleisanlage anordenbaren Waggons, bei dem mittels Radartechnik die Fahrzeuge längs wenigstens eines zu überwachenden Fahrweges der Logistikanlage erfasst werden und der Füllstandkammer, d.h. wenigstens eine Anzahl von Fahrzeugen längs des wenigstens einen zu überwachenden Fahrweges, ermittelt und zur Darstellung gebracht wird, derart weiterzubilden, dass die Erfassung der einzelnen Fahrzeuge zur Füllstandsbestimmung mit Hilfe eines vollständig berührungslos arbeitenden Systems erfolgt, ohne die Notwendigkeit längs der einzelnen Fahrwege über Sende- und Empfangsantennen hinaus, entsprechende technische Hilfsmittels installieren zu müssen. Darüber hinaus soll es möglich sein, den aktuellen Füllstand einer Logistikanlage gesamtheitlich derart zu erfassen, so dass nicht nur die Anzahl einzelner Fahrzeuge längs eines Fahrweges erfasst und zur Anzeige gebracht werden, sondern darüber hinaus auch die Position einzelner Fahrzeuge erfasst werden sollen. In diesem Zusammenhang soll es ebenfalls möglich sein, Zwischenräume zwischen einzelnen Fahrzeugen längs eines Fahrweges zu erfassen. Schließlich gilt es, die einzelnen Fahrzeuge zu charakterisieren bzw. zu klassifizieren, um die Art bzw. Beschaffenheit des einzelnen Fahrzeuges zu bestimmen und ebenfalls zur Darstellung zu bringen.

Das lösungsgemäße Verfahren zeichnet sich durch die im Anspruch 1 enthaltenen Merkmale bzw. Verfahrensschritte aus. Den Erfindungsgedanken vorteilhaft weiterbildende Merkmale sind den Unteransprüchen sowie der weiteren Beschreibung unter Bezugnahme auf die Ausführungsbeispiele zu entnehmen.

Lösungsgemäß zeichnet sich das Verfahren zur Füllstandsbestimmung einer Fahrwege gebundenen Logistikanlage nach den Merkmalen des Oberbegriffes des Anspruches 1 durch die Kombination der nachfolgenden Verfahrensschritte aus:
In einem ersten Schritt wird wenigstens eine Radareinheit - Radareinheit beinhaltet eine Anordnung zeitlich oder räumlich in Querrichtung dislozierter Antennenelemente bestehend aus einer Sende- / Empfangsantenne oder mindestens einer Sende- und einer Empfangsantenne -, die einen geometrisch vorgegebenen Sende- und Empfangskeulenbereich besitzt, in einem vertikalen Abstand über den wenigstens einen zu überwachenden Fahrweg derart angeordnet, so dass der wenigstens eine zu überwachende Fahrweg innerhalb des Sende- und Empfangskeulenbereiches der wenigstens einen Radareinheit liegt. Im Weiteren werden Radarwellen von der Radareinheit ausgesendet und längs des wenigstens einen zu überwachenden Fahrweges reflektierte Radarwellen empfangen. Das Aussenden und Empfangen von Radarwellen kann kontinuierlich oder taktweise, d.h. in Form von Radarpulsen erfolgen, so dass eine chronologische Zeitreihe von Radarsignaldatensätze erhalten wird, von denen die einzelnen Radarsignaldatensätze Rohinformationen über den wenigstens einen zu überwachenden Fahrweg zu jeweils unterschiedlichen Zeitpunkten enthalten.

Auf Basis der so erhaltenen Zeitreihe von Radarsignaldatensätze erfolgt im Rahmen einer Signalprozessierung eine Transformation der Radarsignaldatensätze in eine Zeitreihe von 2-dimensionalen Radarsignaturbildem, die zur weiteren Lokalisierung, Erkennung bzw. Klassifizierung von Fahrzeugen sowie insbesondere zu Zwecken einer Füllstandsbestimmung längs des wenigstens einen überwachten Fahrweges einer weiteren Auswertung, vorzugsweise im Rahmen einer vollautomatischen Bildverarbeitung, unterzogen werden. Diese sieht eine so genannte Änderungsanalyse (Change Detection) vor, bei der im einfachsten Fall wenigstens zwei Radarsignaturbilder aus der gewonnenen Zeitreihe ausgewählt und deren Bildinhalte, im einfachsten Falle mittels Differenzbildbetrachtung, miteinander verglichen werden, um schließlich ein so genanntes Radarsignaturdifferenzbild zu erhalten, anhand dem sowohl eine Lokalisierung als auch Klassifizierung der längs des Fahrweges verteilt angeordneten Fahrzeuge durchgeführt werden können. Die Lokalisierungs- und Klassifizierungsergebnisse werden letztlich auf eine die Logistikanlage repräsentierende schematisierte Schaubilddarstellung zur Ansicht gebracht, anhand der der aktuelle Füllstand bzw. die aktuelle Belegung des wenigstens einen zu überwachenden Fahrwegs mit Fahrzeugen entnommen werden kann.

Das auf einer bildgebenden Radartechnologie basierende lösungsgemäße Verfahren lässt sich in vorteilhafter Weise vielgestaltig ausbilden, nutzt jedoch in allen alternativen Ausführungsvarianten zur Bestimmung des Füllstandes einer Logistikanlage den im Rahmen einer Bildverarbeitung durchzuführenden Vergleich zwischen einem zeitlich möglichst aktuell aufgenommenen Radarsignaturbild und einem in der Zeitchronologie früher aufgenommenen Radarsignaturbild oder einem davon abgeleiteten Radarbezugsbild. Im Rahmen der Änderungsanalyse wird ein so genanntes Radarsignaturdifferenzbild erhalten, anhand dem im Wege an sich bekannter Bildauswertungstechnologien Lokalisierungen sowie auch Klassifizierungen einzelner Fahrzeuge im Bereich des Geländes der zu überwachenden Logistikanlage vorgenommen werden. So lassen sich beispielsweise identifizierte Fahrzeuge relativ zu ebenfalls in den in chronologischer Zeitabfolge erhaltenen Radarsignaturbildem enthaltenen Radarsignaturen von unveränderlichen Landmarken/ Festzielen im Bereich der Logistikanlage, wie beispielsweise Masten, Lampen, Fahrwegverläufe, seschilderungen etc. genau lokalisieren, d.h. georeferenzieren. Wie die weiteren Ausführungen, insbesondere unter Bezugnahme auf die Ausführungsbeispiele zeigen werden, ist es darüber hinaus möglich, anhand der durch Reflexion an einzelnen Fahrzeugen hervorgerufenen Radarsignaturcharakteristika auf einzelne Fahrzeugtypen zu schließen. Hierzu können in besonders vorteilhafter Weise für eine verbesserte eindeutige Klassifizierung einzelner Fahrzeuge den jeweiligen Fahrzeugtyp klassifizierende Reflektorstrukturen an den Fahrzeugen angebracht werden. Ebenso lassen sich neben den reinen Radarsignaturen zudem auch die Polarisationseigenschaften der jeweils von den Fahrzeugen reflektierten Radarwellen in entsprechender Weise zur Fahrzeugtyperkennung nutzen.

In einer besonders bevorzugten Ausführungsvariante des lösungsgemäßen Verfahrens werden bei der Änderungsanalyse nicht wie vorstehend beschrieben, die Bildinhalte zweier unmittelbar aus der Zeitreihe der chronologisch erfassten Radarsignaturbilder ausgewählte Radarsignaturbilder miteinander verglichen, um ein Radardifferenzbild zu erhalten, vielmehr wird ein Radarsignaturbezugsbild mittels einem lernenden Verfahren generiert, beispielsweise im Wege einer adaptiven Bildstapelung, bei der wenigstens zwei vorzugsweise eine Vielzahl chronologisch unmittelbar aufeinander folgend aufgenommener Radarsignaturbilder, mit möglichst identischen Bildinhalten aufgenommen werden und einer statistischen Bildauswertung unterzogen werden, so dass einerseits störende Signaturänderungen, die z.B. durch Rauschen, Witterungseinflüsse etc. herrühren, reduziert und andererseits Signaturänderungen, die von Belegungsänderungen innerhalb der Logistikanlage herrühren, zuverlässiger bestimmt werden können. Ein derartiges Radarsignaturbezugsbild wird im Rahmen der Änderungsanalyse mit einem möglichst aktuellen Radarsignaturbild zur Erstellung eines Radardifferenzbildes verglichen, das in gleicher Weise wie im vorstehend geschilderten Fall die Grundlage für eine Lokalisierung und Klassifizierung der einzelnen innerhalb der Logistikanlage erkannten Fahrzeuge bildet. Zur Erstellung einer schematisierten Schaubilddarstellung dient in vorteilhafter Weise ein graphikfähiger Monitor, auf dem längs der einzelnen Fahrwege der Logistikeinheit die lokalisierten und klassifizierten Fahrzeuge in Form von diese repräsentierende Symbole dargestellt werden.

Gilt es großflächige Logistikanlagen mittels des lösungsgemäßen Verfahrens zu Erfassen, so ist eine Vielzahl n einzelner Radareinheiten einzusetzen. Jede einzelne Radareinheit erzeugt eine Zeitreihe von Radarsignaldatensätze, so dass es gilt zur gesamtheitlichen Erfassung der Logistikanlage n Zeitreihen von

Radarsignaldatensätze zusammenzuführen. Eine derartige Zusammenführung kann in zweierlei Weise erfolgen
a) An jeder einzelnen der n Sende- und Empfangspositionen, d.h. Orte der Radareinheiten, wird eine Zeitreihe von Radarsignaldatensätze gewonnen. Die n einzelnen Zeitreihen von Radarsignaldatensätzen werden prozessiert und in n Zeitreihen von Radarsignaturbildem überführt. Die n Zeitreihen von Radarsignaturbildem werden schließlich zu einer Zeitreihe von so genannten Gesamtradarsignaturbildem zusammengefasst, die jeweils dem Radarabbild der gesamten Logistikanlage entsprechen.
b) An jeder einzelnen der n Sende- und Empfangsposition wird eine Zeitreihe von Radarsignaldatensätzen gewonnen. Die n Zeitreihen der Radarsignaldatensätze werden zu einer Zeitreihe von Gesamtradarsignaldatensätzen zusammengefasst, die prozessiert und in eine Zeitreihe von Gesamtradarsignaturbildem überführt wird.

Eine sich anschließende Änderungsanalyse wird nun auf der Grundlage der Gesamtradarsignaturbilder bzw. von wenigstens einem davon abgeleiteten Bezugbild, vergleichbar mit den vorstehenden Ausführungen, durchgeführt.

In einem ersten Fall werden aus der Zeitreihe der Gesamtradarsignaturbilder wenigstens zwei zu unterschiedlichen Zeitpunkten korrespondierenden Gesamtradarsignaturbilder ausgewählt und auf der Grundlage dieser Gesamtradarsignaturbilder mittels Änderungsanalyse ein Gesamtradardifferenzbild ermittelt.

In bevorzugter Form werden wenigstens zwei Gesamtradarsignaturbilder aus der Zeitreihe der Gesamtradarsignaturbilder ausgewählt und einem lernenden Bildverarbeitungsverfahren zugeführt, in dessen Rahmen, vorzugsweise im Wege einer adaptiven Bildstapelung, ein Gesamtradarsignaturbezugsbild erzeugt wird, das zusammen mit einem aus der Zeitreihe der Gesamtradarsignaturbilder ausgewählten, vorzugsweise einem aktuellen Gesamtradarsignaturbild der Änderungsanalyse zum Erhalt eines Gesamtradardifferenzbildes unterzogen wird. Das Gesamtradardifferenzbild dient als Grundlage für das Lokalisieren und Klassifizieren einzelner Fahrzeuge. Schließlich werden die so lokalisierten und klassifizierten Fahrzeuge zur Darstellung in Form von Schemabildern auf eine die Logistikanlage repräsentierende schematisierte Schaubilddarstellung transformiert.

Das lösungsgemäße Verfahren wird im weiteren im Einsatz an einer Gleisanlage näher erläutert, wie sie beispielsweise bei an sich bekannten Verschiebe- und Rangierbahnhöfen zur Zwischenspeicherung von einer großen Vielzahl von Güterwaggons anzutreffen ist. Auch lässt sich das lösungsgemäße Verfahrensprinzip an einer Vielzahl weiter Logistikanlagen anwenden und einsetzen, wie beispielsweise Hafeneinrichtungen zur Containerlagerung- oder Zwischenspeicherung, Wasserstraßen, Rollwege von Flugplätzen, etc.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: schematisierte Darstellung der Aufsicht eines Verschiebebahnhofes,
- Fig. 2: schematisierte Darstellung der Seitenansicht eines Verschiebebahnhofes,
- Fig. 3: schematisierte Anordnung einer Radareinheit nach MIMO-Konfiguration,
- Fig. 4: schematisierte Darstellung einer MIMO-Radareinheit zur Überwachung großflächiger Logistikanlagen,
- Fig. 5: schematisierte Darstellung zur Zusammenschaltung mehrerer MIMO-Radare zur Erhöhung der Auflösung in Querrichtung,
- Fig. 6a, b: schematisierte Darstellung zur Illustration des Radarreflexionsmechanismus an Güterwaggons sowie
- Fig. 7: Beispiel für eine schematisierte Schaubilddarstellung zur Anzeige des aktuellen Füllstandes eines Verschiebebahnhofes.

### Wege zur Ausführung der Erfindung, gewerbliche Verwendbarkeit

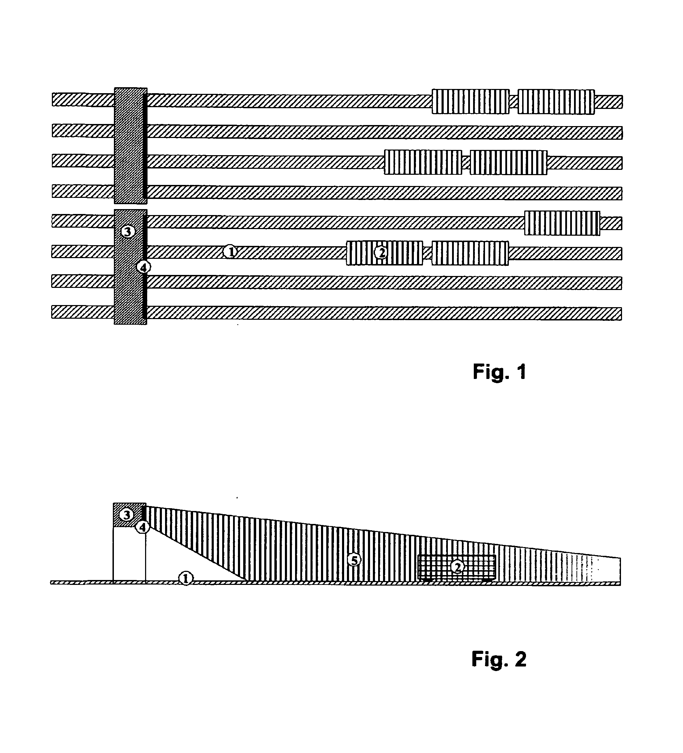

In Figur 1 ist eine schematische Darstellung zur Illustration eines Verschiebebahnhofes mit einer Vielzahl parallel zueinander orientierten Gleisabschnitten 1 gezeigt, längs der in willkürlicher Anordnung einzelne Waggons 2 angeordnet sind. Zur bildhaften Erfassung des Ist-Zustandes der längs der einzelnen Gleise 1 angeordneten Waggons 2 sowie zur Feststellung deren mögliche Positionsveränderungen längs der Gleise 1, werden die Gleise 1 von einem brückenartigen Überbau 3 quer zu deren Längserstreckung überragt, der zugleich als Montageträger für einzelne, die Gleise mittels bildgebender Radartechnik erfassende Radareinheiten 4 dient. Nicht notwendiger Weise ist es erforderlich pro Gleisverlauf eine Radareinheit vorzusehen, die über eine räumliche Abstrahl- und Empfangscharakteristik verfügt, die durch die so genannte Sende- und Empfangskeule charakterisiert ist. Selbstverständlich ist es je nach Ausprägung der Sende- und Empfangskeule der einzelnen Radareinheit möglich, mehrere parallel zueinander verlaufende Gleise 1 von einer einzigen Radareinheit 4 zu überwachen bzw. zu erfassen. Hierbei gilt es die räumliche Orientierung der Sende- und Empfangskeule einer Radareinheit relativ zu den einzelnen Gleisverläufen derart auszurichten, so dass die Gleisverläufe in "Blickrichtung" der Radareinheit möglichst vollständig erfasst werden. Zur Illustration des von jeder einzelnen Radareinheit 4 ausgestrahlten Radarwellenstrahls sei auf Figur 2 verwiesen, die eine Seitenansicht auf die in Figur 1 illustrierte Gleisanlage zeigt. Der schraffiert markierte Bereich 5 illustriert den von einer Radareinheit 4 ausgesandten Radarwellenbereich, aus dem längs des Gleisverlaufes 1 reflektierte Radarwellen, beispielsweise durch Reflektion am Gleisverlauf 1 oder an Waggons 2, die längs des Gleisverlaufes 1 positioniert sind, von der Radareinheit 4 erfasst werden.

Die in einem geeigneten vertikalen Abstand über den einzelnen Gleisen anzuordnenden Radareinheiten arbeiten vorzugsweise mit Radarwellen im Millimeterwellenbereich und verfügen über folgende Eigenschaften:
- geringe Sendeleistung zur Reduktion von Aufwand und Kosten zur Vermeidung von EM-Smog,
- Dauerstrich-Sendesignal zur Erzielung einer hohen mittleren Leistung,
- allwettertauglich und unabhängig einsetzbar von der Tageszeit, insbesondere vernachlässigbare Beeinträchtigungen durch Schnee, Regen, Nebel, Staub und Rauch,
- hohe Entfernungsauflösung, um Waggons und Waggonzwischenräume voneinander zu unterscheiden,
- Updaterate, d.h. zeitlicher Abstand von einem aufgenommenen Radarsignaldatensatz zum nächsten, beträgt wenige Sekunden, beispielsweise 10 Sekunden, zur Diskriminierung sich bewegender Waggons und
- Fähigkeit, die Sende- und Empfangspolarisation der Radarwellen zur Klassifizierung einzelner Waggontypen zu diskriminieren.

Des Weiteren verfügt jede einzelne Radareinheit über eine zweidimensionale, bildgebende Auflösung, die in Blickrichtung jeder einzelner Radareinheit durch die Bandbreite der Radarpulse und quer zur Blickrichtung, d.h. Querrichtung, nicht durch eine schmale reale Antennenkeule bestimmt wird.

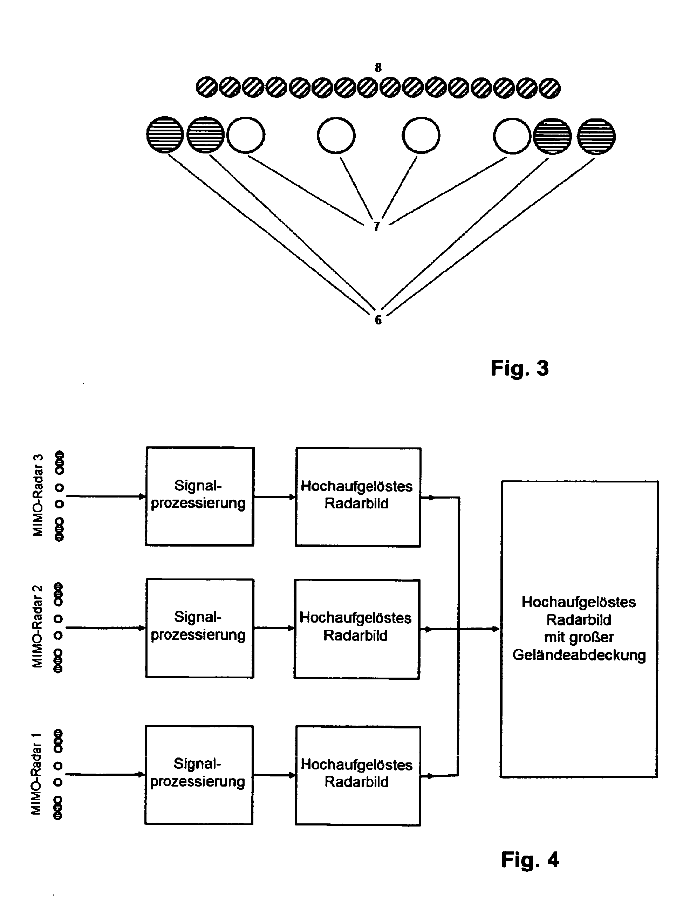

Um eine für eine hohe Auflösung der Waggondetails notwendige große reale Antennenapertur zu vermeiden, dienen Verfahren unter Nutzung der so genannten Synthetischen Apertur. Um eine für die Detektion, d.h. Lokalisierung und Klassifikation einzelner Waggons ausreichende Bildauflösung in Querrichtung, d.h. quer zum Gleisverlauf bzw. quer zur Blickrichtung jeder einzelnen Radareinheit, zu erzielen, bieten sich grundsätzlich unterschiedliche Radarsysteme an, die auf einem der folgenden Radarverfahren basieren:
a) Synthetisches Aperturverfahren mit einer quer zum Fahrweg linear beweglichen Radar-Sende- und Empfangsantenne. Dabei wird eine Antenne mit kleiner Apertur, wie z.B. eine Homantenne, mechanisch mit Hilfe eines Linearantriebes über eine Strecke D', die synthetische Apertur, bewegt, wobei die während dieser Bewegung aufgezeichneten Radarsignaldaten mit Hilfe des bekannten Synthetischen Apertur-Algorithmus so zusammengefasst, dass sich eine Querauflösung δx = R δ α = R λ/D', (D' = Synthetische Apertur) ergibt.
b) Synthetisches Aperturverfahren mit einer starren Gruppenantenne, die elektronisch schwenkbar ist. In diesem Fall werden die einzelnen zu einer Gruppe zusammengefassten Einzelantennen je nach gewünschtem Abstrahlwinkel phasenverzögert zueinander aktiviert. Der Radarwellenempfang erfolgt gleichsam phasenverschoben.
c) Synthetisches Aperturverfahren mit einer stark verdünnten Gruppenantenne auf Basis des MIMO-Prinzips (Multi Input Multi Output).
Der Realisierung des Radarsystems unter Verwendung des MIMO-Prinzips kommt eine besondere Bedeutung zu. Zur Verwendung des MIMO-Prinzips für abbildende Radartechnik wird gemäß der in Figur 3 schematisierten Radareinheit eine geeignete Anzahl (hier je vier) an Sendeelementen (6) und Empfangselementen (7) derart verteilt, dass im Femfeld jede Sende/Empfangsantennenkombination (4x4=16) als ein virtuelles Antennenelement betrachtet werden kann, so dass diese in der Gesamtheit eine vollständig besetzte virtuelle Antenne (8) (hier mit 16 Einzelantennen) bilden. Da beim MIMO-Prinzip N Sende- und M Empfangsantennen I = N x M virtuelle Antennenelemente bilden, kann mit einer relativ geringen Anzahl von realen Antennen ein großes vollständig besetztes Array aus virtuellen Antennen synthetisiert werden. Hieraus ergibt sich eine deutliche Aufwands- und Kostenreduktion.

Das MIMO-Prinzip ist zudem skalierbar, so dass z. B. je nach geforderter Querauflösung die Anzahl der Einzelelemente und somit die Größe der Radareinheit angepasst werden können. So können im Nahbereich kleine und kompakte MIMO-Radare eingesetzt werden, wohingegen für große Distanzen größer MIMO-Radare mit einer höheren Anzahl an Einzelstrahlem zum Einsatz kommen. Durch das Zusammenschalten dieser einzelnen verteilt angeordneten MIMO-Radare auf Bildebene, kann ein beliebig großes Gelände überwacht werden. Figur 4 illustriert diese Zusammenschaltung anhand von drei nebeneinander angeordneten MIMO-Radareinheiten (MIMO-Radar 1, MIMO-Radar 2, MIMO-Radar 3). Zur weiteren Erläuterung wird jeweils die Verarbeitung eines von den Radareinheiten empfangenen bildgebendes Radarsignal betrachtet. Die von den einzelnen MIMO-Radareinheiten stammenden Radarsignale werden jeweils getrennt voneinander prozessiert - im Rahmen der Signalprozessierung -, so dass jeweils einzelne Radarsignaturbilder, siehe hochaufgelöstes Radarbild, erhalten werden, die letztlich zu einem einzigen Gesamtradarsignaturbild zusammengefasst werden (siehe Hochaufgelöstes Radarbild mit großer Geländeabdeckung).

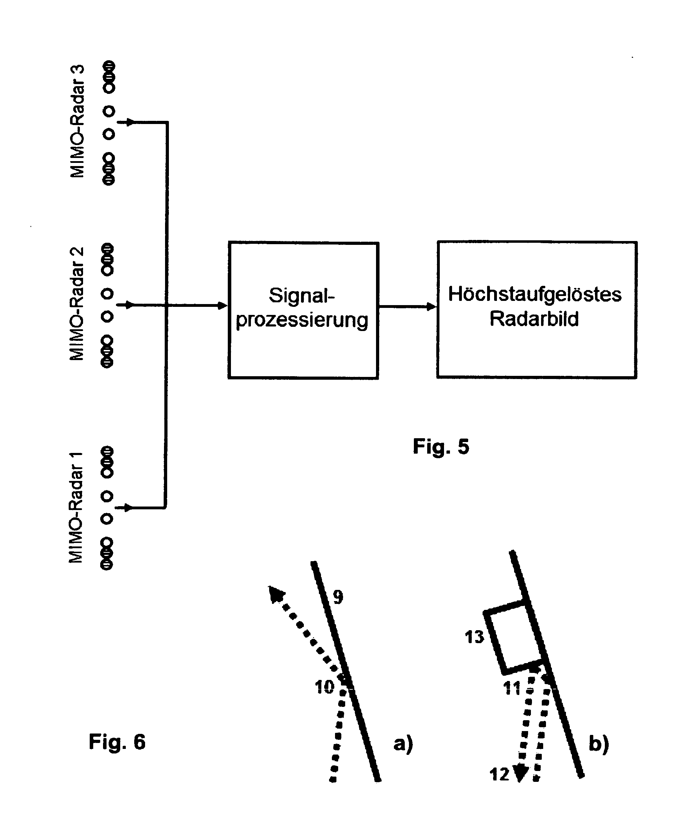

Darüber hinaus können die einzelnen Radarsensoren aber auch auf Sensorebene zur Auflösungserhöhung in Querrichtung zusammen geschaltet werden, siehe Figur 5. Hier werden die Radarsignale der einzelnen MIMO-Radareinheiten bereits auf Sensorbasis zu einem einheitlichen Gesamtradarsignal zusammenfasst, das gesamtheitlich zu einem Gesamtradarsignaturbild prozessiert wird (Höchstaufgelöstes Radarbild).

Für eine erfolgreiche Lokalisierung und Klassifizierung einzelner Waggons längs der Gleise bedarf es Radareinheiten mit jeweils einer hohen Auflösung und hohen Empfindlichkeit für unterschiedliche Oberflächenrauhigkeiten. Da die Auflösung *δr* in Blickrichtung des Radars von der Bandbreite *B* abhängt, mit *δr = c*/*2B* und c gleich Lichtgeschwindigkeit, benötigt das Radar eine genügend hohe Bandbreite. So können auch kleine Details abgebildet werden. Der Hauptanteil der Waggons wirkt jedoch wie eine Art Spiegel, von dem die Radarstrahlung vom Radar weg reflektiert wird, so dass dieser nur ein geringes Echosignal hervorruft. Kleine Unebenheiten wie Ecken, Kanten und Streben erzeugen die eigentliche Radarrückstreuung, weshalb die Waggons hauptsächlich als klassifizierbare Streifenmuster abgebildet werden. Figur 6a, b zeigt die zwei im Wesentlichen auftretenden Reflektionsarten. Während eine ebene Fläche 9 die Radarstrahlung 10 vom Radar weg reflektiert (siehe Fig. 6a), d. h. die Fläche im Radar als nicht sichtbar erscheint, wird bei einer Doppelreflektion 11, siehe Fig. 6b, fast die gesamte Energie zum Radar zurückreflektiert 12. Somit sind von den Wagen hauptsächlich die Streben 13 zu erkennen, was zu den charakteristischen Streifenmustern führt.

Nur der Millimeterbereich erzielt eine hinreichend hohe Empfindlichkeit, um die unterschiedlichen Oberflächenrauhigkeiten der Wagen zur Klassifikation nutzen zu können. Eine hohe Bandbreite muss somit mit einer hohen Mittenfrequenz kombiniert werden. Die Anzahl der Reflektionen bestimmt auch die Empfangspolarisation, die ebenfalls als Eigenschaft für die Klassifizierung herangezogen wird. Somit nutzt das lösungsgemäße Verfahren auch die simultane und/oder eine getrennte Ausnutzung von geometrischen und polarimetrischen Rückstreueigenschaften zur Klassifizierung. Mit Hilfe wenigstens zweier Radarantennen kann die dem jeweiligen Radarsignal pro Radarantenne innewohnende polarimetrische Information entweder getrennt oder gemeinsam ausgewertet werden.

Die prozessierten Radarsignaturen, die nach der Signalprozessierung als Radarsignaturbild vorliegen, sind durch den Bediener der Anlage nicht direkt interpretierbar. Die automatische Bildverarbeitung hat deshalb die Aufgabe, diese Signaturen automatisch zu analysieren und für den Bediener aufzubereiten.
- Automatische Generierung eines Gesamtradarbildes und Georeferenzierung des zu jedem Radarsensor gehörenden Einzelradarbildes anhand von Passpunkten (Landmarken), die z. B. aus den Echosignalen von Festzielen, wie z. B Lampen,Masten und Gleisverläufen, gewonnen werden.
- Erzeugung einer Interessengradientenkarte, die den Gleisverlauf und die bisherige Belegung des Verschiebebahnhofs berücksichtigt.
- Lernen eines normierten Bezugsbildes für die Änderungsanalyse (Change Detection) u. a. über eine adaptive Bildstapelung. Dadurch können Signaturänderungen, die einerseits z.B. durch Rauschen, Witterungseinflüsse etc. herrühren, reduziert und andererseits Signaturänderungen, die von Belegungsänderungen innerhalb der Logistikanlage herrühren, zuverlässiger bestimmt werden können.
- Erzeugung eines Differenzbildes zwischen Bezugsbild und aktuellem Zeitpunkt sowie Segmentation der Änderungen.
- Klassifikation der Änderungssignatur und Typisierung der detektierten, maskierten Objektsignatur. Dabei wird die Polarisation mit zur Diskriminierung verwendet.
- Aufbereitung der analysierten Objekte für eine Darstellung im Rahmen einer abstrahierten Darstellung. Hierbei wird der Wagenstand symbolhaft auf einem Monitor dargestellt, so dass den einzelnen Gleisen sowohl die Anzahl der Wagen als auch die Wagentypen mit ihren entsprechenden Positionen zugeordnet werden können.

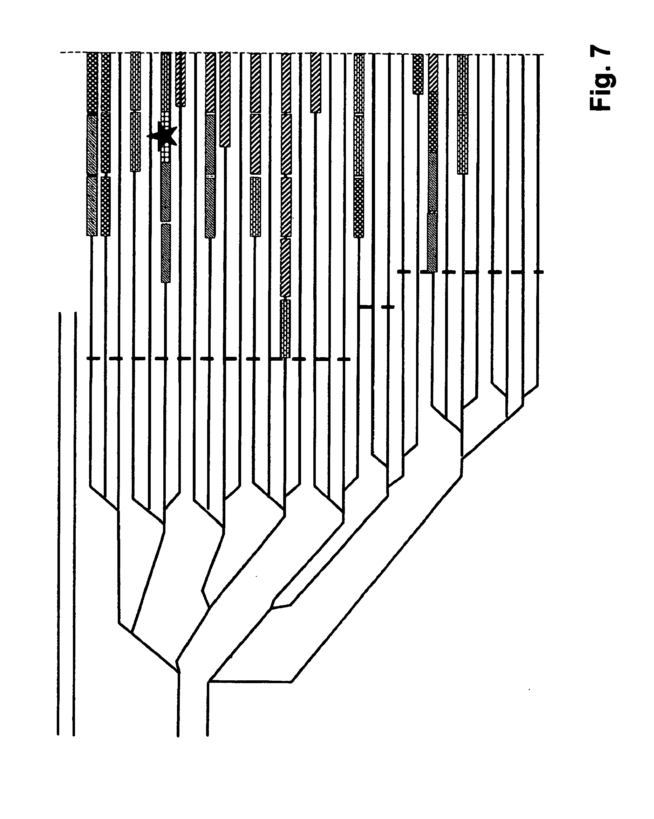

Die Figur 7 stellt auf der linken Hälfte (bis zur gestrichelten, senkrechten Linie) eine Gleisanlage in dem bei der Bundesbahn standardmäßig verwendetem Schema dar. Die texturierten Rechtecke, die auf der rechten Seite zu sehen und dem jeweiligen Gleisverlauf überblendet sind, repräsentieren unterschiedliche Typen von Wagen. Dies soll durch die andersgeartete Textur verdeutlicht werden. Der schwarze Stern (oben rechts) markiert eine Lücke zwischen zwei Wagen, die durch eine zu geringe Ablaufgeschwindigkeit der Wagen verursacht wurde. Das vorgeschlagene System ist also nicht nur in der Lage, das Ende der Wagenketten zu bestimmen, sondern auch die Wagentypen zu identifizieren und Fehler im Betriebsablauf (Lücken) zu erkennen. Im operationellen System wird die Darstellung farbig ausgelegt.

### Bezugszeichenliste

- 1: Gleise
- 2: Waggon
- 3: Brücke
- 4: Radareinheit
- 5: Radarstrahl
- 6: Sendeantennen
- 7: Empfangsantennen
- 8: Konventionell Radareinheiten
- 9: Ebene Fläche
- 10: Radarstrahlung
- 11: Doppelreflektion
- 12: Zurückreflektierte Radarstrahl
- 13: Streben

## Patentansprüche

1. Verfahren zur Füllstandsbestimmung einer fahrweggebundene, eigen- oder fremdangetriebene Fahrzeuge zwischenspeichemden Logistikanlage, insbesondere in Form eines Verschiebe- oder Rangierbahnhofes mit längs einer Gleisanlage anordenbaren Waggons, bei dem mittels Radartechnik die Fahrzeuge längs wenigstens eines zu überwachenden Fahrweges der Logistikanlage erfasst werden und der Füllstand, d.h. wenigstens eine Anzahl von Fahrzeugen längs des wenigstens einen zu überwachenden Fahrweges, ermittelt und zur Darstellung gebracht wird,
**gekennzeichnet durch** die Kombination folgender Verfahrensschritte:
- Anordnen wenigstens einer Radareinheit mit einem Sende- und Empfangskeulenbereich in einem vertikalen Abstand a über dem wenigstens einen Fahrweg derart, dass der wenigstens eine zu überwachende Fahrweg innerhalb des Sende- und Empfangskeulenbereichs der wenigstens einen Radareinheit liegt,
- Aussenden von Radarwellen und Empfangen von längs des wenigstens einen zu überwachenden Fahrweges reflektierten Radarwellen zum Erhalt einer Zeitreihe von Radarsignaldatensätze, die jeweils Rohinformationen des wenigstens einen zu überwachenden Fahrweges zu jeweils unterschiedlichen Zeitpunkten enthalten,
- Prozessieren der Radarsignaldatensätze zum Erhalt einer Zeitreihe von 2-dimensionalen Radarsignaturbildem,
- Durchführen einer Änderungsanalyse zwischen wenigstens zwei aus der Zeitreihe ausgewählten Radarsignaturbildem zum Erhalt eines Radarsignaturdifferenzbildes,
- Lokalisieren und Klassifizieren von Fahrzeugen zumindest auf Grundlage des Radarsignaturdifferenzbildes und
- Transformieren der lokalisierten und klassifizierten Fahrzeuge auf eine die Logistikanlage repräsentierende schematisierte Schaubilddarstellung.

2. Verfahren nach Anspruch 1,
**dadurch gekennzeichnet, dass** das Aussenden von Radarwellen und Empfangen von längs des wenigstens einen zu überwachenden Fahrweges reflektierten Radarwellen mittels eines der folgenden Radarverfahren durchgeführt wird:
a) Synthetisches Aperturverfahren mit einer quer zum Fahrweg linearbeweglichen Radar-Sende- und Empfangsantenne,
b) Synthetisches Aperturverfahren mit einer starren Gruppenantenne, die elektronisch schwenkbar ist,
c) Synthetisches Aperturverfahren mit einer stark verdünnten Gruppenantenne auf Basis des MIMO-Prinzips.

3. Verfahren nach Anspruch 1 oder 2,
**dadurch gekennzeichnet, dass** bei der Änderungsanalyse die Bildinhalte der wenigstens zwei Radarsignaturbilder, von denen eins zu einem jüngeren, vorzugsweise zum aktuellen, und wenigstens ein anderes zu einem älteren Zeitpunkt aufgenommen worden sind, auf Radarsignaturbildunterschiede verglichen werden und das Radardifferenzbild erstellt wird.

4. Verfahren nach Anspruch 1 oder 2,
**dadurch gekennzeichnet, dass** wenigstens zwei Radarsignaturbilder aus der Zeitreihe ausgewählt und einer Bildverarbeitung zugeführt werden zum Erhalt eines Radarsignaturbezugsbildes, und
dass bei der Änderungsanalyse wenigstens ein Radarsignaturbild aus der Zeitreihe, vorzugsweise das aktuelle Radarsignaturbild und das Radarsignaturbezugsbild zum Erhalt des Radardifferenzbildes herangezogen werden.

5. Verfahren nach Anspruch 4,
**dadurch gekennzeichnet, dass** bei der Bildverarbeitung ein lernendes Verfahren zum Einsatz kommt, mit dem das Radarsignaturbezugsbild erhalten wird.

6. Verfahren nach Anspruch 5,
**dadurch gekennzeichnet, dass** das lernende Verfahren eine adaptive Bildstapelung mit einer Vielzahl einzelner Radarsignaturbilder aus der Zeitreihe vornimmt.

7. Verfahren nach einem der Ansprüche 1 bis 6,
**dadurch gekennzeichnet, dass** an einer Vielzahl quer zum Längsverlauf von mehreren, parallel nebeneinander verlaufenden Fahrwegen einer Logistikanlage verteilt angeordneter Sende- und Empfangspositionen mit jeweils einem vertikalen Abstand a über den Fahrwegen Radarwellen ausgesendet und empfangen werden,
a) dass zu jeder Sende- und Empfangsposition eine Zeitreihe von Radarsignaldatensätze gewonnen wird, und dass die einzelnen Zeitreihen von Radarsignaldatensätzen prozessiert und in Zeitreihen von Radarsignaturbildem überführt werden, die zu einer Zeitreihe von Gesamtradarsignaturbildem zusammengefasst werden, oder
b) dass die an jeder Sende- und Empfangsposition gewonnenen Zeitreihen von Radarsignaldatensätzen zu einer Zeitreihe von Gesamtradarsignaldatensätzen zusammengefasst werden, und dass die Zeitreihen der Gesamtradarsignaldatensätze prozessiert und in Zeitreihen von Gesamtradarsignaturbildem überführt werden.

8. Verfahren nach Anspruch 7,
**dadurch gekennzeichnet, dass** aus der Zeitreihe der Gesamtradarsignaturbilder wenigstens zwei zu unterschiedlichen Zeitpunkten korrespondierenden Gesamtradarsignaturbilder ausgewählt werden und auf der Grundlage dieser Gesamtradarsignaturbilder mittels Änderungsanalyse ein Gesamtradardifferenzbild ermittelt wird, oder
dass wenigstens zwei Gesamtradarsignaturbilder aus der Zeitreihe der Gesamtradarsignaturbilder ausgewählt werden und im Wege einer Bildverarbeitung, ein Gesamtradarsignaturbezugsbild erzeugt wird, das zusammen mit einem aus der Zeitreihe der Gesamtradarsignaturbilder ausgewählten, vorzugsweise aktuellem Gesamtradarsignaturbild der Änderungsanalyse zum Erhalt eines Gesamtradardifferenzbildes unterzogen wird,
und
dass das Gesamtradardifferenzbild als Grundlage für das Lokalisieren und Klassifizieren einzelner Fahrzeuge und Transformieren der lokalisierten und klassifizierten Fahrzeuge auf eine die Logistikanlage repräsentierende schematisierte Schaubilddarstellung verwendet wird.

9. Verfahren nach Anspruch 8,
**dadurch gekennzeichnet, dass** die Bildauswertung mittels lernendem Verfahren, vorzugsweise im Wege einer adaptiven Bildstapelung erfolgt.

10. Verfahren nach einem der Ansprüche 1 bis 9,
**dadurch gekennzeichnet, dass** zum Lokalisieren der Fahrzeuge ein georeferenziertes Radarsignaturbild oder Gesamtradarsignaturbild verwendet wird, das Landmarken enthält, die an bekannten Orten in der Logistikanlage unveränderbar identifizierbar sind.

11. Verfahren nach einem der Ansprüche 1 bis 10,
**dadurch gekennzeichnet, dass** zum Klassifizieren von Fahrzeugen die an den einzelnen Fahrzeugen reflektierten Radarwellen, die so genannte Radarsignatur des jeweiligen Fahrzeuges, und/oder die Polarisationseigenschaften der an den Fahrzeugen reflektierten Radarwellen genutzt werden.

## Claims

1. A method for determining the fill level of a logistics installation providing intermediate storage for self-powered or externally powered track-bound vehicles, particularly in the form of a switching or shunting yard with railway cars arranged along a track installation, wherein the vehicles are detected along at least one track of the logistics installation to be monitored by means of radar technology and the fill level, i.e. at least a number of vehicles along the at least one track of the logistics installation to be monitored, is determined and displayed,
**characterized by** a combination of the following steps:
- arranging at least one radar unit with a transmission and reception lobe range at a vertical distance a above the at least one track such that the at least one track to be monitored lies within the transmission and reception lobe range of the at least one radar unit,
- emitting radar waves and receiving radar waves reflected along the at least one track to be monitored in order to obtain a time series of radar signal data records that respectively contain the image information of the at least one track to be monitored at different times,
- processing the radar signal data records in order to obtain a time series of 2-dimensional radar signature images,
- carrying out a change analysis between at least two radar signature images selected from the time series in order to obtain a differential radar signature image,
- localizing and classifying vehicles at least on the basis of the differential radar signature image, and
- transforming the localized and classified vehicles into a schematic diagram representing the logistics installation.

2. The method according to Claim 1,
**characterized in that** the transmission of radar waves and the reception of radar waves reflected along the at least one track to be monitored is carried out by means of one of the following radar methods:
a) synthetic aperture method with a radar transmission and reception antenna that is linearly movable transverse to the track,
b) synthetic aperture method with a rigid array antenna that is electronically rotatable,
c) synthetic aperture method with a significantly attenuated array antenna on the basis of the MIMO principle.

3. The method according to Claim 1 or 2,
**characterized in that** the image contents of the at least two radar signature images, one of which was recorded at a later time, preferably at the current time, and at least one other one of which was recorded at an earlier time, are during the change analysis compared with respect to radar signature image differences and the differential radar image is prepared.

4. The method according to Claim 1 or 2,
**characterized in that** at least two radar signature images are selected from the time series and subjected to image processing in order to obtain a radar signature reference image, and **in**
**that** at least one radar signature image from the time series, preferably the current radar signature image, and the radar signature reference image are utilized during the change analysis in order to obtain the differential radar image.

5. The method according to Claim 4,
**characterized in that** an adaptive method is utilized during the image processing in order to obtain the radar signature reference image.

6. The method according to Claim 5,
**characterized in that** the adaptive method comprises an adaptive image stacking process with a plurality of individual radar signature images from the time series.

7. The method according to one of Claims 1 to 6,
**characterized in that** radar waves are respectively emitted and received at a plurality of transmitting and receiving positions that are arranged transverse to the longitudinal direction of several parallel and adjacently extending tracks of a logistics installation at a vertical distance a above the tracks,
a) that a time series of the radar signal data records is obtained for each transmitting and receiving position, wherein the individual time series of radar signal data records are processed and transformed into time series of radar signature images that are combined into a time series of overall radar signature images, or
b) that the time series of radar signal data records obtained at each transmitting and receiving position are combined into a time series of overall radar signal data records, wherein the time series of overall radar signal data records are processed and transformed into time series of overall radar signature images.

8. The method according to Claim 7,
**characterized in that** at least two overall radar signature images corresponding to different times are selected from the time series of overall radar signature images and an overall differential radar image is determined on the basis of these overall radar signature images by means of a change analysis or
that at least two overall radar signature images are selected from the time series of overall radar signature images and an overall radar signature reference image is generated by means of image processing and subjected to the change analysis together with an overall radar signature image selected from the time series of overall radar signature images, preferably the current overall radar signature image, in order to obtain the overall differential radar image,
and
that the overall differential radar image is used as the basis for localizing and classifying individual vehicles and for transforming the localized and classified vehicles into a schematic diagram representing the logistics installation.

9. The method according to Claim 8,
**characterized in that** the image analysis is carried out with an adaptive method, preferably by means of an adaptive image stacking process.

10. The method according to one of Claims 1 to 9,
**characterized in that** the vehicles are localized by using a geo-referenced radar signature image or overall radar signature image containing landmarks that can be identified in an unchanged fashion at known locations in the logistics installation.

11. The method according to one of Claims 1 to 10,
**characterized in that** vehicles are classified by using the radar waves reflected on the individual vehicles, namely the so-called radar signature of the respective vehicle, and/or the polarization properties of the radar waves reflected on the vehicles.

## Revendications

1. Procédé de détermination du niveau d'occupation d'une installation logistique de stockage provisoire liée à une voie de circulation et à entraînement propre ou extérieur, se présentant en particulier sous la forme d'une gare de rassemblement ou de triage, comportant des wagons pouvant être disposés le long d'une installation de voies, dans lequel, au moyen d'une technique radar, les véhicules sont enregistrés le long d'au moins une voie de circulation à surveiller et le niveau d'occupation, c'est-à-dire au moins un certain nombre de véhicules se trouvant le long de l'au moins une voie de circulation à surveiller, est déterminé et amené à s'afficher,
**caractérisé par** la combinaison des étapes opératoires suivantes :
- disposition d'au moins une unité radar comportant une zone de branche d'émission et de réception à une distance verticale a au-dessus de l'au moins une voie de circulation de manière à ce que l'au moins une voie de circulation à surveiller se trouve dans la zone de la branche d'émission et de réception de l'au moins une unité radar,
- envoi d'ondes radar et réception d'ondes radar réfléchies le long de l'au moins une voie de circulation à surveiller pour obtenir une série chronologique d'enregistrements de signaux radar qui contiennent respectivement des informations brutes sur l'au moins une voie de circulation à surveiller à des moments respectivement différents,
- traitement des enregistrements de signaux radar pour obtenir une série chronologique d'images de signatures radar bidimensionnelles,
- réalisation d'une analyse de modifications entre au moins deux images de signatures radar sélectionnées dans la série chronologique pour obtenir une image des différences de signatures radar,
- localisation et classification de véhicules au moins sur la base de l'image des différences de signatures radar et
- transposition des véhicules localisés et classifiés sur une représentation graphique schématisée représentant l'installation logistique.

2. Procédé selon la revendication 1,
**caractérisé en ce que** l'envoi d'ondes radar et la réception d'ondes radar réfléchies le long de l'au moins une voie de circulation à surveiller se font au moyen d'un des procédés de radar suivants :
a) procédé synthétique d'ouverture avec une antenne d'émission et de réception de radar mobile linéairement transversalement à la voie de circulation,
b) procédé synthétique d'ouverture avec une antenne de groupe rigide qui peut pivoter par système électronique,
c) procédé synthétique d'ouverture avec une antenne de groupe fortement diluée basée sur le principe MIMO.

3. Procédé selon la revendication 1 ou 2,
**caractérisé en ce que,** lors de l'analyse de modification, les contenus graphiques des au moins deux images de signatures radar dont une a été prise à un moment plus récent, de préférence au moment actuel, et au moins une autre à un moment plus ancien, sont comparés au niveau des différences d'images de signatures radar et l'image des différences de radar est établie.

4. Procédé selon la revendication 1 ou 2,
**caractérisé en ce qu**'au moins deux images de signatures radar sont sélectionnées dans la série chronologique et envoyées à un traitement d'images pour obtenir une image de référence de signatures radar et
que, lors de l'analyse de modification, on a recours à au moins une image de signature radar de la série chronologique, de préférence l'image de signature radar actuelle et l'image de signature radar de référence, pour obtenir l'image des différences de radar.

5. Procédé selon la revendication 4,
**caractérisé en ce que,** lors du traitement d'images, on utilise un procédé didactique qui permet d'obtenir l'image de référence de signatures radar.

6. Procédé selon la revendication 5,
**caractérisé en ce que** le procédé didactique procède à un échelonnement des images adaptatif avec une multiplicité d'images de signatures radar distinctes de la série chronologique.

7. Procédé selon une des revendications 1 à 6,
**caractérisé en ce que,** à des positions d'émission et de réception disposées réparties sur une multiplicité de voies de circulation s'étendant transversalement à l'extension longitudinale de voies de circulation parallèles entre elles d'une installation logistique, des ondes radar sont envoyées et reçues respectivement à une distance verticale a au-dessus des voies de circulation,
a) que, pour chaque position d'émission et de réception, une série chronologique d'enregistrements de signaux radar est obtenue et que les séries chronologiques distinctes d'enregistrements de signaux radar sont traitées et transposées dans des séries chronologiques d'images de signatures radar qui sont regroupées en une série chronologique d'images globales de signatures radar ou
b) que les séries chronologiques distinctes obtenues d'enregistrements de signaux radar obtenues à chaque position d'émission et de réception sont regroupées en une série chronologique d'enregistrements globaux de signaux radar et que les séries chronologiques d'enregistrements globaux de signaux radar sont traitées et transposées dans des séries chronologiques d'images globales de signatures radar.

8. Procédé selon la revendication 7,
**caractérisé en ce que,** dans la série chronologique d'images globales de signatures radar, au moins deux images globales de signatures radar correspondant à différents moments sont sélectionnées et qu'une image globale de différences de radar est déterminée sur la base de ces images globales de signatures radar au moyen d'une analyse de modification ou
qu'au moins deux images globales de signatures radar sont sélectionnées dans la série chronologique d'images globales de signatures radar et que, au moyen d'un traitement d'images, il est créé une image globale de référence de signatures radar qui est soumise à l'analyse de modification avec une image globale de signatures radar sélectionnée dans la série chronologique d'images globales de signatures radar, de préférence actuelle, pour obtenir une image globale des différences de signatures radar et
que l'image globale des différences de signatures radar est utilisée comme base pour la localisation et la classification des véhicules distincts et la transposition des véhicules localisés et classifiés sur une représentation graphique schématisée représentant l'installation logistique.

9. Procédé selon la revendication 8,
**caractérisé en ce que** l'exploitation des images se fait par procédé didactique, de préférence au moyen d'un échelonnement d'images adaptatif.

10. Procédé selon une des revendications 1 à 9, **caractérisé en ce que,** pour localiser les véhicules, on utilise une image de signatures radar ou image globale de signatures radar géoréférencée qui est identifiable sans changements à des endroits connus de l'installation logistique.

11. Procédé selon une des revendications 1 à 10,
**caractérisé en ce que,** pour classifier les véhicules, on utilise les ondes radar réfléchies par les véhicules distincts, ce qu'on appelle la signature radar du véhicule respectif et/ou les propriétés de polarisation des ondes radar réfléchies par les véhicules.
